Europäisches Patentamt

European Patent Office

Office européen des brevets

(19)

(11) Publication number: **0 506 984 B1**

# EUROPEAN PATENT SPECIFICATION

(45) Date of publication of patent specification: **09.08.95**  (51) Int. Cl.⁶: **C09K 3/18**

(21) Application number: **91920865.2**

(22) Date of filing: **03.10.91**

(86) International application number:
**PCT/SU91/00197**

(87) International publication number:
**WO 92/06145 (16.04.92 92/09)**

(54) **METHOD OF OBTAINING A DEICING COMPOUND.**

(30) Priority: **05.10.90 SU 4880466**

(43) Date of publication of application:
**07.10.92 Bulletin 92/41**

(45) Publication of the grant of the patent:
**09.08.95 Bulletin 95/32**

(84) Designated Contracting States:
**AT BE CH DE FR GB IT LI LU NL SE**

(56) References cited:
**EP-A- 0 027 292
CH-A- 0 651 059
SU-A- 1 498 780
US-A- 3 549 549**

(73) Proprietor: **TOVARISCHESTVO S. ORGANICHENNOI OTVETSTVENNOSTIJU FIRMA
"GRIKOL - limited"
ulitsa Smolnaya, 1-3
Moscow (RU)**

(72) Inventor: **GRINEVICH, Sergei Vasilievich
ulitsa Stalevarov, 4**

**korpus 4, kv. 643
Moscow (RU)**
Inventor: **KAMENETSKY, Leonid Borisovich
ulitsa Ostrovityanova, 45
korpus 1, kv. 355
Moscow (RU)**
Inventor: **LYSENKO, Valentina Efimovna
Yaroslavskoe shosse, 8
korpus 1, kv. 208
Moscow (RU)**
Inventor: **ZVEREV, Vladimir Vladimirovich
Zeleny prospekt, 83
korpus 4, kv. 132
Moscow (RU)**
Inventor: **BUDKOV, Vyacheslav Artemievich
Klenovy bulvar, 15
korpus 1, kv. 237
Moscow (RU)**
Inventor: **GRINEVICH, Klavdia Petrovna
prospect Mira, 122, kv. 141
Moscow (RU)**

(74) Representative: **Allden, Thomas Stanley et al**
**A.A. THORNTON & CO.**
**Northumberland House**
**303-306 High Holborn**
**London WC1V 7LE (GB)**

# EP 0 506 984 B1

**Description**

The present invention relates to a method of producing an anti-icing composition for preventing or reducing icing of a surface.

Anti-icing compositions are used to prevent the formation of solid ice, and to melt ice already formed, by means of lowering the freezing point of water. Compounds widely used in the art are inorganic salts - sodium chloride, magnesium chloride, calcium chloride, potassium phosphate, sodium phosphate, ammonium phosphate, alkaline-earth metals nitrates, magnesium nitrate, ammonium sulfate, alkali metals sulfates, as well as organic compounds such as low-molecular alcohols, glycols and glycerol.

A problem of using the abovementioned compounds is that they are corrosive on various production materials and their use is not ideal for environmental reasons. It is common knowledge that, owing to their cheapness, the most applicable are inorganic salts: sodium, calcium and magnesium chlorides. The chlorine content in the abovementioned compounds not only causes the destruction of ice, but also causes corrosion of metal materials, concrete and masonry, and causes damage to plants.

When using the abovementioned organic compounds, corrosion diminishes, but in this case an economic problem arises as a result of great losses of the applied compound owing to its volatility, and the problem of the environment protection.

For example, an anti-icing compound such as mono-ethylene glycol, used frequently for automobiles, is extremely harmful to ground waters. Alcohols, and methyl alcohol in particular, possess a poisonous effect and have high volatility, which creates a fire hazard.

Besides, organic compounds cannot prevent icing for a long time. In addition to the abovementioned disadvantages, owing to oxidation by oxygen contained in the air, such alcohols can form acids that intensify the corrosion process of production materials.

Methods of preparing anti-icing compounds which decrease the chloride content in the abovementioned compounds are known in the art. This makes it possible to reduce their activity with respect to corrosion.

Thus, for example, a method of production of a salt mixture intended to be spread over streets and roads is disclosed in DE-A-3141644. The method resides in the action of aqueous solutions of hydrochloric acid on granulated calcium carbonate. As a result, a saline mixture is obtained, which consists of 10-50% by weight calcium chloride and 50-90% by weight calcium carbonate. Owing to a reduced fraction of calcium chloride, the harmful effect of the given saline mixture on the environment is diminished. However, such a mixture has a low melting power with reference to ice and cannot ensure a prolonged anti-icing effect owing to a fast wash-out of calcium chloride.

CH-A-651059 discloses a method of production of an anti-icing compound which consists of mixing a saturated solution of sodium chloride with a strong mineral base - sodium hydroxide and alkyl siliconate of an alkali metal, for example, potassium methyl siliconate. Sodium hydroxide and potassium methyl siliconate regulate the pH value of the medium, neutralizing the acid reaction, thus reducing the corrosion effect of the compound.

Potassium methyl siliconate is introduced into the compound in the amount of 0.05% or more by weight of the mixture, using it only as a water-repellent substance.

The compound so obtained is spread over the pavement surface in the form of a saturated or highly concentrated solution or in a powderlike form.

However, the compound fails to ensure a prolonged anti-icing effect owing to fast wash-out of chlorides when applying the compound onto a treated surface in the form of a solution, and fails to prevent repeated icing when there is a drop in the ambient air temperature. The harmful effect of sodium chloride on the environment is displayed by the accumulation of chloride and sodium ions in the roadside area, which leads to contamination of underground sources of water supply, and damage and suppression of the roadside vegetation.

In accordance with the present invention, a method of producing anti-icing compositions is provided which, owing to changing the proportion and physical condition of the initial components, makes it possible to prepare a composition which has a prolonged anti-icing effect and which prevents repeated icing when there is a drop in the ambient air temperature, and which is not harmful to the environment or corrosive to metals.

The present invention provides a method of producing an anti-icing composition which comprises mixing an alkali and/or alkaline-earth metal chloride with an alkyl or alkene siliconate of the alkali metal, characterized in that the alkali metal alkyl siliconate or alkali metal alkene siliconate is used in the form of a water-soluble powder, and the mixing is effected in the solid phase, in such a way that the alkyl or alkene siliconate is partially polymerised during mixing and envelopes the chloride grains, the mixing being effected in the following proportions (% by weight):

| alkali and/or alkaline earth metal chloride | 95-85 |
|---|---|
| alkali metal alkyl siliconate or alkali metal alkene siliconate | 5-15 |

The use of the initial components in the form of water-soluble powders and the mixing of the components in the solid phase makes it possible to prepare a composition with a prolonged anti-icing effect, which is capable of preventing repeated ice formation, and is also not harmful to the environment or corrosive to metals, both when this composition is applied onto a surface covered with ice to be thawed, and when introduced as a component into a mixture that forms a road pavement, with a view to its imparting anti-icing properties on the latter.

In order to prolong the anti-icing effect, it is recommended to mould the mixture of the abovementioned components at a temperature of 20-100°C under a pressure of 50-150 MPa, with subsequent grinding.

In order to produce the anti-icing composition, water-soluble powders of alkali and/or alkaline-earth metal chloride and alkali metal alkyl siliconate or alkali metal alkene siliconate are mixed in the following proportions (% by weight):

| alkali and/or alkaline-earth metal chloride | 95-85 |
|---|---|
| alkali metal alkyl siliconate or alkali metal alkene siliconate | 5-15 |

The alkali and/or alkaline-earth metal chloride may be calcium chloride, magnesium chloride or sodium chloride, used individually or in any combination.

Examples of a suitable alkali metal alkyl siliconate are sodium or potassium methyl, ethyl or propyl siliconate. An example of a suitable alkali metal alkene siliconate is sodium vinyl siliconate.

Alkali metal alkyl siliconate or alkali metal alkene siliconate is a water-repelling agent, i.e. a substance which imparts water-repelling properties to materials. The water-repelling ability of alkyl or alkene siliconates is because of the organic radicals ethyl, methyl, propyl, vinyl, whose chain length is comparable, the latter feature ensuring the same hydrolytic stability and, consequently, identical properties.

The powderlike alkali metal amorphous alkyl or alkene siliconate is obtained through a reaction of alkali with alkyl trialkoxy silane. The powderlike alkali metal alkyl siliconate or alkali metal alkene siliconate is water-soluble. The content of the basic substance in the powder is at least 70% by weight. When dissolved in water, a sediment is permissible not in excess of 2% by weight. Mixing of the components taken in the solid phase makes it possible to obtain the composition of the present invention, which has a prolonged anti-icing effect owing to the fact that the alkyl or alkene siliconate in the powderlike form - which becomes partially polymerized during mixing - envelopes the grains of said chloride, preventing penetration of moisture into the composition, and decreases the wash-out of chloride from the composition.

The use of alkali metal alkyl siliconate or alkali metal alkene siliconate in the form of a water-soluble powder makes it possible to obtain a composition with a prolonged anti-icing effect that prevents a repeated ice formation. The composition so obtained does not inflict harm on the environment and features no corrosion activity in relation to metals, both when the composition in the solid phase is applied onto the treated surface, and when it is introduced as a component into the mixture, which forms a road pavement, with a view to its imparting anti-icing properties on the latter.

When the anti-icing composition of the present invention gets in contact with ice or snow, the alkali metal alkyl siliconate or alkali metal alkene siliconate, contained in the mixture in an amount of 5-15% by weight, while dissolving, acts not only as a water repellent, but being also a surfactant, lowers the surface tension on the phase boundary. The anticorrosive action of the composition is explained by its basicity, owing to which fact it is possible to regulate the pH value of the medium on the treated surface and to neutralize the acid reaction. With the content of alkali metal alkyl siliconate or alkali metal alkene siliconate less than 5% by weight, full fixation of chlorine ions does not occur, which fact adversely effects the ecology. With alkali metal alkyl siliconate or alkali metal alkene siliconate contained in the mixture in excess of 15% by weight, the cost of the anti-icing compound rises, with maintaining of the obtained effect.

To strengthen the prolonged anti-icing effect of the composition of the present invention in the process of its preparation, the mixture of chloride and alkyl or alkene siliconate is subjected to moulding in the standard rolling equipment under a pressure of 50-150 MPa and at a temperature of 20-100°C, with subsequent grinding. The size of the obtained granules should not exceed 0.1mm when the composition is used as a component of the mixture for treatment. When the anti-icing composition is applied onto the treated surface, the size of granules is of no importance.

A pressure mode of 50-150 MPa used in moulding is specified by the fact that the mixture of components at a pressure of less than 50MPa is quickly separated into layers. When moulding at a pressure of more that 150 MPa, the rate of dissolution of granules practically does not change, but power consumption rises. The temperature mode is specified by the fact that at a temperature of more than 100°C in the surface layer of granules there occurs a complete polymerization of sodium alkyl siliconate or sodium alkene siliconate with the formation of a water-repellent shell and a further temperature rise is not expedient from the viewpoint of power consumption. When the granules of the composition interact with ice, there occurs the dissolution and dissociation of the alkyl or alkene siliconate of the alkali metal with the formation of a cation of the alkali metal and an anion of siliconate. At the same time, alkali or alkaline-earth metal chloride is dissociated with the formation of a respective chlorine cation and anion. Interacting at a rate of ionic reactions, the metal cations and siliconate anions form insoluble siliconates of the alkali or alkaline-earth metal which settle out into sediment, the chlorine anions, present in the solution, being adsorbed and fixed on the surface of the sediment, which considerably reduces their content in the solution.

The effect of preventing the repeated ice formation on the treated surface when the ambient air temperature passes through 0°C is achieved owing to the fact that the composition of the present invention, by thawing the ice due to the solubility of the powder of the alkyl or alkene siliconate, ensures the formation of a hydrophobization solution which imparts water-repellent properties to the treated surface. Being a surfactant, alkali metal alkyl siliconate or alkali metal alkene siliconate reduces the water tension surface and in combination with a hydrophobic layer of the treated surface creates a localized zone with an antifreezing and wetting effect.

In order that the invention may be more fully understood, examples thereof will now be described.

Example 1

Powderlike sodium vinyl siliconate with a bulk density of 0.7 g/cm$^3$ and sodium chloride are mixed in the proportion 10 and 90% by weight, respectively.

The obtained mixture is subjected to forming by pressing in rollers under a pressure of 100 MPa and at a temperature of 50°C. As a result of forming, 0.5mm thick solid plates are obtained, which are ground in a ball mill into 0.09mm granules.

The prepared anti-icing composition is tested for determining the duration of its anti-icing effect and influence on the environment by way of dissolving the produced granules in water and measuring the quantity of sodium chloride, that passed into the solution, and the quantity of chlorine ions in time.

The test results are given in the Table.

Example 2

Powderlike sodium ethyl siliconate with a bulk density of 0.65 g/cm$^3$ and calcium chloride are mixed in the proportion 10 and 90% by weight, respectively.

The mixture so obtained is subjected to forming by pressing in rollers under a pressure of 100 MPa and at a temperature of 50°C. The plates obtained after forming are ground in a rod mill into 0.1mm granules.

The composition is subjected to testing in order to determine the duration of the anti-icing effect and its influence on the environment.

The test results are given in the Table.

Example 3

The method is carried out as described in Example 2, except that magnesium chloride is used as the alkaline-earth metal chloride.

The test results are given in the Table.

Example 4

The method is carried out as described in Example 2, except that a mixture of sodium chloride and calcium chloride is used.

The results of testing the obtained composition are given in the Table.

Example 5

95% by weight sodium chloride and 5% by weight powderlike sodium ethyl siliconate with a bulk density of 0.7 g/cm$^3$ are mixed. The mixture is formed by way of pressing it in rollers under a pressure of 150 MPa at a temperature of 20°C. The produced plates are ground into 0.1mm granules.

The composition so obtained is tested to determine the duration of the anti-icing effect and influence on the environment.

The test results are given in the Table.

Example 6

85% by weight solid sodium chloride and 15% by weight powder of sodium ethyl siliconate with a bulk density of 0.7 g/cm$^3$ are mixed. The mixture is formed under a pressure of 50 MPa at a temperature of 100°C. The obtained plates are subjected to grinding into 0.1 mm granules. The composition is tested in order to determine the duration of the anti-icing effect and influence on the environment.

The test results are given in the Table.

Example 7

95% by weight solid calcium chloride and 5% by weight powder of sodium ethyl siliconate with a bulk density of 0.7 g/cm$^3$ are mixed.

The mixture is formed in rollers under a pressure of 150 MPa at a temperature of 100°C. The obtained plates are ground into 0.5mm granules.

The composition is subjected to testing to determine the duration of the anti-icing effect and influence on the environment.

The test results are given in the Table.

Example 8

85% by weight solid calcium chloride and 15% by weight the powder of sodium vinyl siliconate with a bulk density of 0.65 g/cm$^3$ are mixed. The mixture is formed in rollers under a pressure of 50 MPa at a temperature of 20°C. The obtained plates are ground into 0.1mm granules which are subjected to testing in order to determine the duration of the anti-icing effect and influence on the environment.

The test results are given in the Table.

Example 9

95% by weight solid magnesium chloride and 5% by weight powder of sodium vinyl siliconate with a bulk density of 0.65 g/cm$^3$ are mixed.

The mixture is formed in rollers under a pressure of 150 MPa at a temperature of 50°C. The obtained plates are ground into 0.1mm granules.

The composition is subjected to testing to determine the duration of the anti-icing effect and influence on the environment.

The test results are given in the Table.

Example 10

85% by weight solid magnesium chloride and 15% by weight powder of sodium ethyl siliconate with a bulk density of 0.7 g/cm$^3$ are mixed.

The mixture is formed in rollers under a pressure of 100 MPa at a temperature of 100°C. The obtained plates are ground into 0.1mm granules.

The composition is subjected to testing for determining the duration of the anti-icing effect and influence on the environment.

The test results are given in the Table.

Example 11

95% by weight sodium chloride and calcium chloride, in a 1:1 ratio, and 5% by weight powder of sodium ethyl siliconate with a bulk density of $0.7 g/cm^3$ are mixed.

The mixture is formed as described in Example 10.

The test results are given in the Table.

Example 12

The method is carried out as described in Example 11, except that the mixture of chlorides is used in the quantity of 85% by weight, with sodium ethyl siliconate 15% by weight, while the pressure of pressing is 150 MPa.

The test results of the composition are given in the Table.

For the purpose of comparison, the Table gives the test results of a check sample of the composition of the present invention and of a known anti-icing compound disclosed in CH-A-651059.

| Nos of example | Proportion of mixture components, % by mass | | | | | | Forming conditions | |
|---|---|---|---|---|---|---|---|---|
| | alkali and/or alkaline-earth metal chloride | | | | sodium alkyl-alkene-siliconate | | temper-ature, °C | press-ure, MPa |
| | NaCl | CaCl$_2$ | MgCl$_2$ | NaCl + CaCl$_2$ | sodium ethyl silico-nate | sodium vinyl silico-nate | | |
| 1 | 2 | 3 | 4 | 5 | 6 | 7 | 8 | 9 |
| 1 | 90 | – | – | – | – | 10 | 50 | 100 |
| 2 | – | 90 | – | – | 10 | – | 50 | 100 |
| 3 | – | – | 90 | – | 10 | – | 50 | 100 |
| 4 | – | – | – | 90 | 10 | – | 50 | 100 |
| 5 | 95 | – | – | – | 5 | – | 20 | 150 |
| 6 | 85 | – | – | – | 15 | – | 100 | 50 |
| 7 | – | 95 | – | – | 5 | – | 100 | 150 |
| 8 | – | 85 | – | – | – | 15 | 20 | 50 |
| 9 | – | – | 95 | – | – | 5 | 50 | 150 |
| 10 | – | – | 85 | – | 15 | – | 100 | 100 |
| 11 | – | – | – | 95 | 5 | – | 100 | 100 |
| 12 | – | – | – | 85 | 15 | – | 100 | 150 |
| Control | – | – | – | 100 | – | – | – | – |

The known compound according to CH-A-651059

Table (continued)

| Nos of exa- mple | Quantity which passed into chloride solution, % during a period | | | | | Quantity of chlorine ions in solution,% during a period | | | | |
|---|---|---|---|---|---|---|---|---|---|---|
| | after 1 h | after 3 h | after 10 h | after 24 h | after 72h | after 1 day | after 2days | after 3 days | after 5 days | after 10 days |
| 1 | 10 | 11 | 12 | 13 | 14 | 15 | 16 | 17 | 18 | 19 |
| 1 | 14 | 23 | 34 | 43 | 51 | 72 | 60 | 43 | 21 | 10 |
| 2 | 10 | 18 | 28 | 37 | 41 | 48 | 36 | 24 | 10 | 0 |
| 3 | 10 | 19 | 28 | 36 | 41 | 44 | 35 | 23 | 10 | 0 |
| 4 | 11 | 21 | 30 | 42 | 47 | 60 | 45 | 31 | 17 | 3 |
| 5 | 78 | 86 | 94 | 99 | 99 | 78 | 64 | 51 | 32 | 19 |
| 6 | 64 | 79 | 90 | 95 | 99 | 71 | 57 | 44 | 25 | 8 |
| 7 | 41 | 50 | 62 | 77 | 86 | 61 | 48 | 32 | 19 | 1 |
| 8 | 22 | 31 | 39 | 50 | 61 | 51 | 37 | 3 | 0 | 0 |
| 9 | 12 | 21 | 30 | 42 | 50 | 49 | 30 | 21 | 7 | 0 |
| 10 | 8 | 10 | 21 | 30 | 42 | 6 | 3 | 1 | 0 | 0 |
| 11 | 77 | 84 | 92 | 98 | 99 | 63 | 57 | 42 | 19 | 3 |
| 12 | 3 | 6 | 10 | 19 | 23 | 4 | 2 | 0 | 0 | 0 |
| Cont- rol | 100 | 100 | 100 | 100 | 100 | 100 | 100 | 100 | 90 | 75 |
| | 100 | 100 | 100 | 100 | 100 | 100 | 100 | 100 | 90 | 75 |
| Same | 80 | 96 | 100 | 100 | 100 | 100 | 100 | 100 | 90 | 75 |

As seen from the above Table, the anti-icing composition prepared by means of the method of the present invention possesses a prolonged effect and inflicts no harm on the environment.

The present invention may be most efficiently used to prevent glaze on motor roads, bridges, sidewalks and to remove snow and ice from roofs. The composition may be introduced into a mixture for road pavements in order to impart anti-icing properties to them; otherwise, it may be applied directly on the surface for cleaning it by way of thawing ice or snow.

## Claims

1. A method of producing an anti-icing composition which comprises mixing an alkali and/or alkaline-earth metal chloride with an alkyl or alkene siliconate of the alkali metal, characterized in that the alkali metal alkyl siliconate or alkali metal alkene siliconate is used in the form of a water-soluble powder, and the mixing is effected in the solid phase, in such a way that the alkyl or alkene siliconate is partially polymerised during mixing and envelopes the chloride grains, the mixing being effected in the following proportions (% by weight):

| | |
|---|---|
| alkali and/or alkaline-earth metal chloride | 95-85 |
| alkyl or alkene siliconate of alkali metal | 5-15 |

2. A method according to Claim 1, characterized in that the mixture is formed at a temperature of 20-100°C under a pressure of 50-150 MPa, with subsequent grinding.

3. A method according to Claim 1 or 2, characterized in that the alkyl or alkene siliconate of the alkali metal is sodium ethyl siliconate, sodium vinyl siliconate, sodium methyl siliconate or sodium propyl siliconate.

**Patentansprüche**

1. Verfahren zur Herstellung einer Frostschutzmischung, die darin besteht, ein Alkali- oder ein Erdalkalimetallchlorid mit einem Alkyl- oder Alkensilikonat des Alkalimetalls zu mischen, dadurch gekennzeichnet, daß das Alkalimetallalkylsilikonat oder Alkalimetallalkensilikonat in der Form eines wasserlöslichen Pulvers verwendet wird und das Mischen in der festen Phase derart vorgenommen wird, daß das Alkyl- oder Alkensilikonat während des Mischens teilweise polymerisiert wird und die Chloridpartikel einschließt, wobei das Mischen in folgenden Proportionen (% Gewicht) durchgeführt wird:

| | |
|---|---|
| Alkali- bzw. Erdalkalimetallchlorid | 95-85 |
| Alkyl- oder Alkensilikonat von Alkalimetall | 5-15 |

2. Verfahren gemäß Anspruch 1, dadurch gekennzeichnet, daß die Mischung bei einer Temperatur von 20-100°C unter einem Druck von 50-150 MPa, mit anschließendem Mahlen hergestellt wird.

3. Verfahren gemäß Anspruch 1 oder 2, dadurch gekennzeichnet, daß das Alkyl- oder Alkensilikonat des Alkalimetalls Natriumethylsilikonat, Natriumvinylsilikonat, Natriummethylsilikonat oder Natriumpropylsilikonat ist.

**Revendications**

1. Une méthode pour produire une composition antigivrage qui comprend le mélange d'un chlorure de métal alcalin et/ou de métal alcalino-terreux avec un siliconate d'alkyle ou d'alkylène de métal alcalin, caractérisé par le fait que le siliconate d'alkyle de métal alcalin ou le siliconate d'alkylène de métal alcalin est utilisé sous forme de poudre soluble dans l'eau, et que le mélange est effectué dans la phase solide de telle manière que le siliconate d'alkyle ou d'alkylène soit partiellement polymérisé pendant le mélange et enveloppe les granules de chlorure, le mélange se faisant dans le proportions suivantes (% par poids):

| | |
|---|---|
| Chlorure de métal alcalin et/ou alcalino-terreux | 95-85 |
| Siliconate d'alkyle ou d'alkylène de métal alcalin | 5-15 |

2. Une méthode selon la Revendication 1, caractérisée par le fait que le mélange est formé à une température de 20-100°C, à une pression de 50-150 MPa, suivi de broyage.

3. Une méthode selon la Revendication 1 ou 2, caractérisé par le fait que le siliconate d'alkyle ou d'alkylène du métal alcalin est du siliconate éthylique de sodium, du siliconate vinylique de sodium, du siliconate méthylique de sodium ou du siliconate propylique de sodium.